# EUROPEAN PATENT APPLICATION

(11) **EP 4 661 090 A1**
(43) Date of publication of application: **10.12.2025**
(21) Application number: 24750260.2
(22) Date of filing: 30.01.2024
(51) Int. Cl.: H01M 4/06, H01M 6/16

(54) **LITHIUM PRIMARY BATTERY**

(30) Priority: 31.01.2023 JP 2023013497
(71) Applicant: Panasonic Intellectual Property Management Co., Ltd., Kadoma-shi, Osaka 571-0057 (JP)
(72) Inventor: ANDO, Keita, Kadoma-shi, Osaka 571-0057 (JP); ASANO, Yuya, Kadoma-shi, Osaka 571-0057 (JP)
(74) Representative: Novagraaf International SA
(86) International application number: PCT/JP2024/002781
(87) International publication number: WO 2024/162311

(57) **Abstract**

A lithium primary battery includes a wound electrode group, and a nonaqueous electrolyte solution. The electrode group is constituted by spirally winding a belt-shaped positive electrode, a belt-shaped negative electrode, and a separator disposed between the positive electrode and the negative electrode. The positive electrode contains at least one selected from the group consisting of manganese dioxide and graphite fluoride, and the negative electrode includes a lithium alloy. The lithium alloy is one or more selected from the group consisting of Mg and Al, and contains at least Mg, and the total content of Mg and Al in the lithium alloy is 0.02 mass% or more and 11 mass% or less. The negative electrode has an outermost peripheral region arranged at an outermost layer of the electrode group, and a main region on the more inner peripheral side than the outermost peripheral region. A ratio T1/T2 of a thickness T1 of the outermost peripheral region to a thickness T2 of the main region is more than 0.5 and less than 1.

## Description

### [Technical Field]

The present disclosure relates to a lithium primary battery.

### [Background Art]

Lithium primary batteries have high energy density and low self-discharge, and are therefore used as power sources for many electronic devices. The wound electrode group of a lithium primary battery is formed by spirally winging a belt-shaped positive electrode, a belt-shaped negative electrode, and a separator disposed between the positive electrode and the negative electrode. For the positive electrode, manganese dioxide or the like is used. For the negative electrode, for example, lithium metal or lithium alloy in the form of sheet (foil) is used.

Patent Literature 1 proposes "a method for producing a nonaqueous electrolyte solution battery, the nonaqueous electrolyte solution battery including a spiral electrode group in which a belt-shaped lithium negative electrode comprising a sheet-form of lithium or lithium alloy and a belt-shaped positive electrode are spirally wound with a separator therebetween, and an outer jacket can in which the spiral electrode body is inserted together with a nonaqueous electrolyte solution, the method comprising: a negative electrode forming step of forming a first lithium negative electrode having a long shape and a step of forming a second lithium negative electrode having a short shape which has a length shorter than the first lithium negative electrode; a negative electrode attaching step of attaching the first lithium negative electrode and the second lithium negative electrode to the separator so as to be arranged in a line in a length direction thereof; a separator folding step of folding the separator, with one end portions of the respective first and second lithium negative electrodes overlap each other; and a spiral electrode body forming step of overlapping the belt-shaped positive electrode onto the separator folded in the separator folding step, and spirally winding together, with the belt-shaped positive electrode placed inward, to form a spiral electrode body, wherein a part of the first lithium negative electrode that is longer than the second lithium negative electrode becomes an outermost layer portion of the spiral electrode body when formed into the spiral electrode body."

Patent Literature 2 proposes "an organic electrolyte battery having a configuration (a) or (b), characterized by having a configuration of (c) or (d). (a) The organic electrolyte battery includes an electrode body in which a belt-shaped positive electrode and a belt-shaped negative electrode whose thickness decreases as it is discharged are spirally wound with a separator therebetween. (b) The negative electrode is at an outermost layer of the electrode body. (c) A current collecting tab for connection to the negative electrode is connected to an outermost layer of the negative electrode. (d) The thickness of the outermost layer of the spirally wound negative electrode is adjusted to 70% or less of the thickness of the central portion of the negative electrode."

Patent Literature 3 proposes "a lithium battery, comprising a negative electrode, a lithium-ion conductive organic electrolyte solution, and a positive electrode, wherein the negative electrode includes a lithium plate and a lithium alloy plate having a high lithium content, the lithium plate and the lithium alloy plate being overlapped with each other, with the lithium plate arranged on the side facing a negative electrode can, and the lithium alloy plate arranged on the side facing the separator."

Patent Literature 4 proposes "a lithium primary battery, comprising a positive electrode containing iron disulfide as a positive electrode active material, a negative electrode including lithium alloy as a negative electrode active material, an electrode group in which the positive electrode and the negative electrode are wound with a separator interposed therebetween, and a nonaqueous electrolyte solution, wherein the lithium alloy contains at least one of magnesium and tin in an amount of 0.02 to 0.2 mol %."

### [Citation List]

### [Patent Literature]

Patent Literature 1: Japanese Laid-Open Patent Publication No. H11-242961
Patent Literature 2: Japanese Laid-Open Patent Publication No. H4-62755
Patent Literature 3: Japanese Laid-Open Patent Publication No. S63-133448
Patent Literature 4: International Publication WO 2012/066709

### [Summary of Invention]

### [Technical Problem]

The negative electrode of the wound electrode group has an outermost peripheral region arranged at the outermost layer of the electrode group, and a main region other than the outermost peripheral region. In the main region, both principal surfaces of the negative electrode face the positive electrode, while in the outermost peripheral region, at least the principal surface of the negative electrode on outer peripheral side does not face the positive electrode. Therefore, during discharging, lithium is more likely to be consumed in the main region than in the outermost peripheral region, causing the negative electrode reaction to be non-uniform, and the negative electrode may be partially lost or broken at the final stage of discharge, which may result in degraded performance.

One possible way to make the negative electrode reaction uniform is to set the thickness of the negative electrode to be thinner in the outermost peripheral region than in the main region (e.g., Patent Literatures 1 and 2). However, reducing the thickness decreases the strength, and a part of the negative electrode may be lost or broken at the final stage of discharge, which may result in degraded performance.

### [Solution to Problem]

One aspect of the present disclosure relates to a lithium primary battery, including: a wound electrode group, and a nonaqueous electrolyte solution, wherein the electrode group is constituted by spirally winding a belt-shaped positive electrode, a belt-shaped negative electrode, and a separator disposed between the positive electrode and the negative electrode, the positive electrode contains at least one selected from the group consisting of manganese dioxide and graphite fluoride, the negative electrode includes a lithium alloy, the lithium alloy is one or more selected from the group consisting of magnesium and aluminum, and contains at least the magnesium, a total content of the magnesium and the aluminum in the lithium alloy is 0.02 mass% or more and 11 mass% or less, the negative electrode has an outermost peripheral region arranged at an outermost layer of the electrode group, and a main region on a more inner peripheral side than the outermost peripheral region, and a ratio T1/T2 of a thickness T1 of the outermost peripheral region to a thickness T2 of the main region is more than 0.5 and less than 1.

### [Advantageous Effects of Invention]

According to the present disclosure, it is possible to suppress the degradation in performance of the lithium primary battery.

While the novel features of the invention are set forth particularly in the appended claims, the invention, both as to organization and content, will be better understood and appreciated, along with other objects and features thereof, from the following detailed description taken in conjunction with the drawings.

### [Brief Description of Drawings]

[FIG. 1] A schematic cross-sectional view of an example of a wound electrode group.
[FIG. 2] A front view, partially shown in section, of a lithium primary battery according to an embodiment of the present disclosure.
[FIG. 3] A schematic top view of an example of a separator-attached negative electrode used in preparation of a wound electrode group.

### [Description of Embodiments]

Embodiments of the present disclosure will be described below by way of examples, but the present disclosure is not limited to the examples described below. In the following description, specific numerical values and materials are exemplified in some cases, but other numerical values and other materials may be adopted as long as the effects of the present disclosure can be obtained. In the present specification, when referring to "a range of a numerical value A to a numerical value B," the range includes the numerical value A and the numerical value B, and can be rephrased as "a numerical value A or more and a numerical value B or less." In the following description, when the lower and upper limits of numerical values related to specific physical properties, conditions, etc. are mentioned as examples, any one of the mentioned lower limits and any one of the mentioned upper limits can be combined in any combination as long as the lower limit is not equal to or more than the upper limit. When a plurality of materials are mentioned as examples, one kind of them may be selected and used singly, or two or more kinds of them may be used in combination.

The present disclosure encompasses a combination of matters recited in any two or more claims selected from plural claims in the appended claims. In other words, as long as no technical contradiction arises, matters recited in any two or more claims selected from plural claims in the appended claims can be combined.

The lithium primary battery according to an embodiment of the present disclosure includes a wound electrode group, and a nonaqueous electrolyte solution. The electrode group is constituted by spirally winding a belt-shaped positive electrode, a belt-shaped negative electrode, and a separator disposed between the positive electrode and the negative electrode. The positive electrode contains at least one selected from the group consisting of manganese dioxide and graphite fluoride, as a positive electrode active material, and the negative electrode includes a lithium alloy, as a negative electrode active material.

The lithium alloy is one or more selected from the group consisting of magnesium (Mg) and aluminum (Al), and contains at least Mg. That is, the lithium alloy is a lithium alloy containing Mg and substantially free of Al (hereinafter sometimes referred to as a "Li-Mg alloy"), or a lithium alloy containing Mg and Al (hereinafter sometimes referred to as a "Li-Mg-Al alloy"). Here, "being substantially free of Al" means that the amount of Al is less than the detection limit in a composition analysis of the lithium alloy (e.g., ICP emission spectrometry, atomic absorption spectrometry, etc.).

The content of the sum of Mg and Al in the lithium alloy is 0.02 mass% or more and 11 mass% or less. That is, the Mg content in the Li-Mg alloy is 0.02 mass% or more and 11 mass% or less. The total content of Mg and Al in the Li-Mg-Al alloy is 0.02 mass% or more and 11 mass% or less. The Mg content in the Li-Mg-Al alloy is preferably 0.1 mass% or more.

The positive and negative electrodes are wound such that the negative electrode is arranged at the outermost layer of the electrode group. In addition, due to a risk that, if the negative electrode is arranged at the innermost layer, the burrs in the longitudinal direction of the positive electrode current collector may pierce through the separator and come in contact with the negative electrode, the positive and negative electrodes are usually wound such that the positive electrode is arranged at the innermost layer of the electrode group.

The negative electrode has an outermost peripheral region arranged at the outermost layer of the electrode group, and a main region (other than the outermost peripheral region) on the more inner peripheral side than the outermost peripheral region. A ratio T1/T2 of a thickness T1 of the outermost peripheral region to a thickness T2 of the main region is more than 0.5 and less than 1. Note that the thicknesses T1 and T2 are a thickness of the lithium alloy in the form of foil (sheet), and when the negative electrode includes a negative electrode current collector (e.g., copper foil) supporting a lithium alloy, the thickness of the negative electrode current collector is not included. In the vicinity of the main region in the outermost peripheral region (in a region N1 described later), a region of thickness T2 may be slightly included. For example, 70% or more of the outermost peripheral region may be a region of thickness T1. In the main region of the negative electrode, both principal surfaces of the negative electrode face the positive electrode. The outermost peripheral region of the negative electrode has at least one round of the outermost layer of the electrode group, and in the outermost peripheral region, at least the principal surface of the negative electrode on outer peripheral side does not face the positive electrode.

When the T1/T2 is less than 1, it is possible to suppress the non-uniform progress of the negative electrode reaction resulted from that lithium is more likely to be consumed in the main region than in the outermost peripheral region during discharging. In the present disclosure, furthermore, in the negative electrode, a Li-Mg alloy with a Mg content of 0.02 mass% or more, or a Li-Mg-Al alloy with a total content of Mg and Al of 0.02 mass% or more is used. By this, the deterioration of the negative electrode at the final stage of discharge (partial loss or breakage of the negative electrode) when the T1/T2 is less than 1 can be suppressed, leading to increased proportion of Li that can contribute to the discharge reaction at the final stage of discharge. Thus, the degradation in performance can be suppressed. Note that the degradation in performance includes a voltage drop at the final stage of discharge (e.g., a voltage drop at the final stage of discharge in a pulse discharge in a low-temperature environment) and a decrease in capacity in association therewith.

However, when the T1/T2 is 0.5 or less, the thickness T1 of the outermost peripheral region is reduced, and even though a negative electrode containing the above lithium alloy is used, the negative electrode may deteriorate at the final stage of discharge and the performance may degrade. In addition, when the Mg content in the Li-Mg alloy or the total content of Mg and Al in the Li-Mg-Al alloy is more than 11 mass%, the amount of Li in the negative electrode decreases, and the absolute amount of Li decreases, which may result in degraded performance.

From the viewpoint of making uniform the negative electrode reaction, the T1/T2 is preferably 0.95 or less, more preferably 0.9 or less, further more preferably 0.8 or less. From the viewpoint of suppressing the deterioration of the negative electrode at the final stage of discharge, the T1/T2 is preferably 0.55 or more, more preferably 0.6 or more. The T1/T2 may be 0.6 or more and 0.8 or less. The thickness T2 is, for example, 200 µm or more and 250 µm or less (or 230 µm or less). Note that the T1/T2 is a thickness ratio in an unused (undischarged) battery.

The thickness T1 of the outermost peripheral region and the thickness T2 of the main region can be determined as follows.

A wound electrode group is taken out from a battery before use (undischarged), to confirm the main region, the outermost peripheral region, and the vicinity of the main region in the outermost peripheral region (a portion that can be a region N1 described later: a region from the boundary with the main region to 3/10 of one round of the outermost layer) of the negative electrode in the electrode group. At this time, in order to make it possible to distinguish the respective regions from each other when the negative electrode is later taken out from the electrode group, the boundaries between the regions are marked with a check. Thereafter, the negative electrode is taken out from the electrode group, unfolded, and washed with a nonaqueous solvent (e.g., 1,2-dimethoxyethane), followed by drying to remove the nonaqueous electrolyte attached to the negative electrode. Next, the thicknesses at any 10 points excluding the vicinity of the main region in the outermost peripheral region of the negative electrode (a portion that can be a region N1 described later) are measured, and the average value of these measurements is calculated as the thickness T1 of the outermost peripheral region. The thicknesses at any 10 points of the main region of the negative electrode are measured, and the average value of these measurements is calculated as the thickness T2 of the main region.

The negative electrode may include, for example, a first lithium alloy foil, and a second lithium alloy foil arranged to be overlapped with a part of the first lithium alloy foil (a part to be the main region). The first lithium alloy foil has a thickness T1. The second lithium alloy foil has a thickness (T2-T1). By forming a region of thickness T1 using the first lithium alloy foil, and overlapping the first lithium alloy foil with the second lithium alloy foil, a region of thickness T2 can be formed. The first lithium alloy foil and the second lithium alloy foil both contain the above lithium alloy. The first lithium alloy foil and the second lithium alloy foil may have the same alloy composition or different alloy compositions. The first lithium alloy foil and the second lithium alloy foil can be adhered to each other by utilizing a pressure force generated during the production of a wound electrode group.

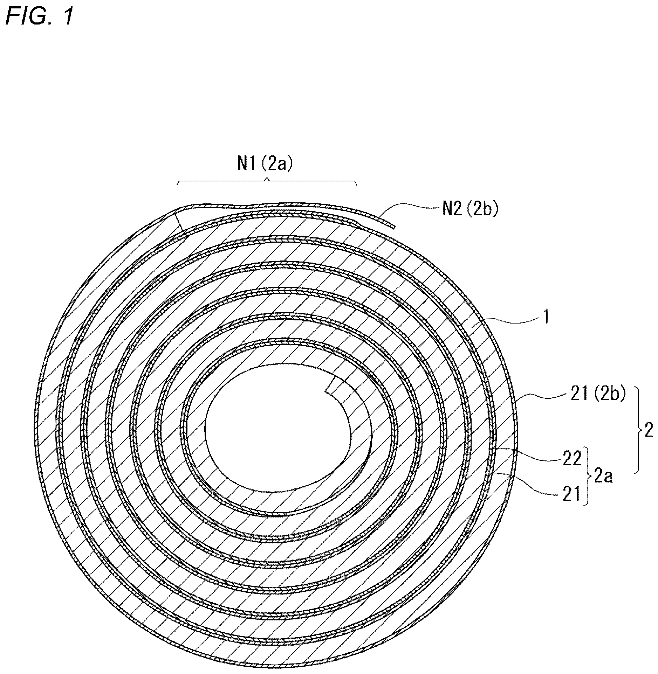

FIG. 1 is a schematic cross-sectional view of an example of a wound electrode group, which is a view showing a cross section perpendicular to the winding axis of the electrode group. In the electrode group of FIG. 1, for the sake of convenience, the separators arranged on both sides (the outer peripheral side and the inner peripheral side) of the negative electrode 2 are not shown. Note that FIG. 1 is a schematic diagram and does not necessarily reflect the actual dimensions and thickness ratios.

The electrode group includes a positive electrode 1, a negative electrode 2, and a separator (not shown) interposed between the positive electrode 1 and the negative electrode 2. The separator is arranged on both sides of the negative electrode 2. The negative electrode 2 includes a region 2b constituted only of a first lithium alloy foil 21, and a region 2a constituted of the first lithium alloy foil 21 and a second lithium alloy foil 22. The first lithium alloy foil 21 has a thickness T1. The second lithium alloy foil 22 has a thickness (T2-T1).

As shown in FIG. 1, the boundary between the region 2b of thickness T1 constituted only of the first lithium alloy foil 21 and the region 2a of thickness T2 constituted of the first lithium alloy foil 21 and the second lithium alloy foil 22 may shift slightly toward the outermost peripheral region from the actual boundary between the outermost peripheral region and the main region. That is, the negative electrode 2 may have a region N1, in the vicinity of the main region in the outermost peripheral region, as the region 2a of thickness T2 constituted of the first lithium alloy foil 21 and the second lithium alloy foil 22. The region N1 is, for example, a region of 3/10 or less of one round of the outermost layer of the electrode group. In this case, the entire main region can be reliably a region having a thickness T2.

The main region has the region 2a of thickness T2, while the outermost peripheral region (when having a region N1, excluding the region N1) has the region 2b of thickness T1. In the main region, both principal surfaces of the negative electrode 2 face the positive electrode 1. In the outermost peripheral region, at least the principal surface of the negative electrode 2 on the outer peripheral side does not face the positive electrode 1. The outermost peripheral region has at least one round of the outermost layer of the electrode group. In the wound portion corresponding to one round of the outermost layer of the electrode group, the principal surface of the negative electrode 2 on the outer peripheral side does not face the positive electrode 1. As shown in FIG. 1, the region 2b may have a region N2 that extends beyond one round of the outermost layer of the electrode group. In the region N2, both principal surfaces of the negative electrode 2 do not face the positive electrode 1. The region N2 is, for example, a region of 4/10 or less of one round of the outermost layer of the electrode group.

### (Lithium alloy)

The lithium alloy used for the negative electrode is, for example, in the form of foil or sheet. From the viewpoint of ensuring the capacity, the Li content in the lithium alloy, for example, may be 89 mass% or more, and may be 95 mass% or more.

The lithium alloy contains at least Mg, and may be substantially free of Al, and from the viewpoint of improving the output voltage, preferably contains Al. That is, the lithium alloy may be a Li-Mg alloy, and is preferably a Li-Mg-Al alloy. When the lithium alloy contains Mg, the Mg, which has a relatively high strength, remains thin like a foil (sheet) at the final stage of discharge, and can serve as a core material, which can suppress the partial loss or breakage of the negative electrode at the final stage of discharge that occurs when the thickness of the outermost peripheral region is reduced. When the lithium alloy contains Al, a negative electrode surface film with low resistance is formed. When the lithium alloy contains Mg together with Al, uneven consumption of Li resulting from segregation of Al is suppressed. In this case, the effects produced by Mg and Al are stably obtained throughout the negative electrode, and Li is evenly consumed at the negative electrode surface, and the proportion of Li that can contribute to the discharge reaction at the final stage of discharge is further increased.

From the viewpoint of suppressing the deterioration of the negative electrode at the final stage of discharge when the T1/T2 is less than 1, the total content of Mg and Al in the lithium alloy is 0.02 mass% or more, may be 0.05 mass% or more, may be 0.1 mass% or more, and may be 0.2 mass% or more. From the viewpoint of ensuring the Li amount in the negative electrode, the total content of Mg and Al in the lithium alloy is 11 mass% or less, may be 8 mass% or less, and may be 5 mass% or less.

From the viewpoint of suppressing the deterioration of the negative electrode at the final stage of discharge when the T1/T2 is less than 1, the Mg content in the lithium alloy (Li-Mg alloy or Li-Mg-Al alloy) may be 0.05 mass% or more, may be 0.1 mass% or more, and may be 0.2 mass% or more. From the viewpoint of ensuring the Li amount in the negative electrode, the Mg content in the lithium alloy (Li-Mg alloy or Li-Mg-Al alloy) may be 9.5 mass% or less, 7 mass% or less, 5 mass% or less, and 2 mass% or less.

From the viewpoint of further improving the output voltage, the Al content in the lithium alloy (Li-Mg-Al alloy) may be 0.01 mass% or more, may be 0.02 mass% or more, may be 0.05 mass% or more, and may be 0.1 mass% or more. The Al content in the lithium alloy (Li-Mg-Al alloy) may be 1 mass% or less from the viewpoint of ensuring the Li amount, and is preferably 0.5 mass% or less from the viewpoint of ease of winding the negative electrode. The Al content in the lithium alloy (Li-Mg-Al alloy), for example, may be 0.01 mass% or more and 0.5 mass% or less, and may be 0.1 mass% or more and 0.5 mass% or less. In the case of a Li-Mg-Al alloy, the mass ratio of Mg/Al of Mg to Al may be, for example, 0.2 or more and 50 or less.

The lithium alloy may contain another metal element other than Li, Mg, and Al. Examples of the another metal element include Na, Ca, Sn, Ni, Pb, In, K, Fe, and Si. From the viewpoint of ensuring discharge capacity and stabilizing internal resistance, the total content of the metal elements other than lithium contained in the lithium alloy is preferably 15 mass% or less or 11 mass% or less.

The composition of the lithium alloy can be determined by inductively coupled plasma (ICP) emission spectrometry or atomic absorption spectrometry (AAS).

The lithium primary battery of the present disclosure will be described in more detail below.

### [Lithium primary battery]

### (Positive electrode)

The positive electrode contains, as a positive electrode active material, at least one selected from the group consisting of manganese dioxide and graphite fluoride. Using this positive electrode is beneficial in terms of output voltage as compared to when using a positive electrode of iron disulfide. As the manganese dioxide, electrolytic manganese dioxide is preferably used. A positive electrode containing manganese dioxide exhibits relatively high voltage, and is beneficial in terms of improving the discharge characteristics (pulse discharge characteristics). The manganese dioxide may be in a mixed crystal state including multiple crystal states. The positive electrode may contain a manganese oxide other than manganese dioxide. Examples of the manganese oxide other than manganese dioxide include MnO, Mn₃O₄, Mn₂O₃, and Mn₂O₇. The major component of the manganese oxide contained in the positive electrode is preferably manganese dioxide. The major component herein means that the ratio of manganese dioxide in the manganese oxide is 50 mass% or more. The ratio of manganese dioxide in the manganese oxide may be 70 mass% or more, and may be 90 mass% or more.

Supposing that iron disulfide is used as the positive electrode active material, the output voltage will be significantly reduced. This is because a positive electrode containing iron disulfide has a standard electrode potential that is low, as compared to a positive electrode containing manganese dioxide or graphite fluoride. The nominal voltage of a lithium primary battery in which the positive electrode active material is manganese dioxide or graphite fluoride is 3.0 V, whereas the nominal voltage of a lithium primary battery in which the positive electrode active material is iron disulfide is 1.5 V. Since the nominal voltages differ by about 1.5 V, especially in a pulse discharge or the like at low temperatures, the output voltage will significantly decrease when iron disulfide is used as the positive electrode active material.

The positive electrode may include a positive electrode mixture containing a positive electrode active material, a binder, a conductive agent, and the like. Examples of the binder include fluorocarbon resins such as polytetrafluoroethylene, rubber particles, and acrylic resins. Examples of the conductive agent include conductive carbon materials. Examples of the conductive carbon materials include natural graphite, artificial graphite, carbon black, and carbon fibers.

The positive electrode can further include a positive electrode current collector that holds the positive electrode mixture. Examples of the material of the positive electrode current collector include stainless steel, aluminum, and titanium.

In the case of a cylindrical battery, a positive electrode including a sheet-form positive electrode current collector and a positive electrode mixture layer held by the positive electrode current collector can be used. As the sheet-form positive electrode current collector, a current collector with pores is preferred. Examples of the current collector with pores include expanded metal, net, and punched metal. The positive electrode mixture layer can be obtained by, for example, applying the aforementioned positive electrode mixture in a wet state onto a surface of the sheet-form positive electrode current collector or packing it into the positive electrode current collector, applying a pressure thereto in the thickness direction, followed by drying.

### (Negative electrode)

The negative electrode includes the aforementioned lithium alloy in the form of foil (sheet). The lithium alloy is formed into any shape and thickness depending on the shape, dimensions, standard performance, and the like of the lithium primary battery. The negative electrode may include a negative electrode current collector (e.g., copper foil) that supports the lithium alloy. However, the lithium alloy contains Mg, and the Mg, which has a relatively high strength, remains thin like a foil (sheet) at the final stage of discharge. Therefore, the negative electrode can be constituted using only a lithium alloy in the form of foil (sheet), without using a negative electrode current collector. In addition, with a lithium alloy containing both Mg and Al, a low-resistance surface film is formed, and the output voltage can be increased, as compared to with lithium metal or a lithium alloy containing only one of Mg and Al.

In the case of a cylindrical battery, a sheet-form lithium alloy may be used for the negative electrode. The sheet is obtained by, for example, extrusion molding. Specifically, in a cylindrical battery, a lithium alloy foil or the like with a shape having a longitudinal direction and a lateral direction can be used.

### (Nonaqueous electrolyte solution)

The nonaqueous electrolyte solution contains, for example, a nonaqueous solvent and a lithium salt. The concentration of lithium ions (total concentration of lithium salts) contained in the nonaqueous electrolyte solution is, for example, 0.2 mol/L or more and 2.0 mol/L or less, and may be 0.3 mol/L or more and 1.5 mol/L or less.

The nonaqueous solvent may be an organic solvent that can be generally used in the nonaqueous electrolyte solution of a lithium primary battery. The nonaqueous solvent may be an ether, an ester, a carbonic acid ester, and the like. As the nonaqueous solvent, dimethyl ether, γ-butyrolactone, propylene carbonate (PC), ethylene carbonate (EC), dimethyl carbonate, diethyl carbonate, ethyl methyl carbonate, 1,2-dimethoxyethane (DME), 1,2-diethoxyethane, methyl acetate, ethyl acetate, propyl acetate, and the like can be used. The nonaqueous electrolyte solution may contain one kind of nonaqueous solvent, or may contain two or more kinds of nonaqueous solvents.

From the viewpoint of improving the discharge characteristics of the lithium primary battery, the nonaqueous solvent preferably contains a cyclic carbonic acid ester whose boiling point is high, and a chain ether which exhibits low viscosity even at low temperatures. The cyclic carbonic acid ester preferably includes at least one selected from the group consisting of PC and EC, of which PC is particularly preferred. The chain ether preferably includes DME.

The lithium salt may be, for example, a lithium salt used as a solute in a lithium primary battery. Examples of such a lithium salt include LiCF₃SO₃, LiClO₄, LiBF₄, LiPF₆, LiRaSO₃, where Ra is a fluorinated alkyl group having 1 to 4 carbon atoms, LiFSO₃, LiN(SO₂Rb)(SO₂Rc), where Rb and Rc are each independently a fluorinated alkyl group having 1 to 4 carbon atoms, LiN(FSO₂)₂, LiN(SO₂CF₃)₂, LiN(SO₂F)(POF₂), LiPO₂F₂, LiB(C₂O₄)₂, and LiBF₂(C₂O₄). In particular, from the viewpoint of the stability against a lithium alloy containing Al and Mg, at least one selected from the group consisting of LiCF₃SO₃, LiBF₄, and LiN(FSO₂)₂ is preferred. The nonaqueous electrolyte solution may contain one or more kinds of these lithium salts.

The nonaqueous electrolyte solution may further contain another component, such as the aforementioned additive. Examples of the another component other than the aforementioned additive include propane sultone, propene sultone, ethylene sulfite, 3,2-dioxathiolane-2,2-dioxide, vinylene carbonate, vinylethylene carbonate, fluoroethylene carbonate, adiponitrile, succinonitrile, and succinic anhydride. The another component may be a lithium salt, and may be capable of generating lithium ions.

### (Separator)

A lithium primary battery usually includes a separator interposed between the positive electrode and the negative electrode. As the separator, a porous sheet formed of an electrically insulating material that is resistant to the internal environment of the lithium primary battery may be used. Specifically, a nonwoven fabric made of a synthetic resin, a microporous film made of a synthetic resin, or a laminate of these, and the like can be used.

Examples of the synthetic resin used for the nonwoven fabric include polypropylene, polyphenylene sulfide, and polybutylene terephthalate. Examples of the synthetic resin used for the microporous film include polyolefin resins, such as polyethylene, polypropylene, and ethylene-propylene copolymer. The microporous film may contain inorganic particles, as necessary.

The thickness of the separator is, for example, 5 µm or more and 100 µm or less.

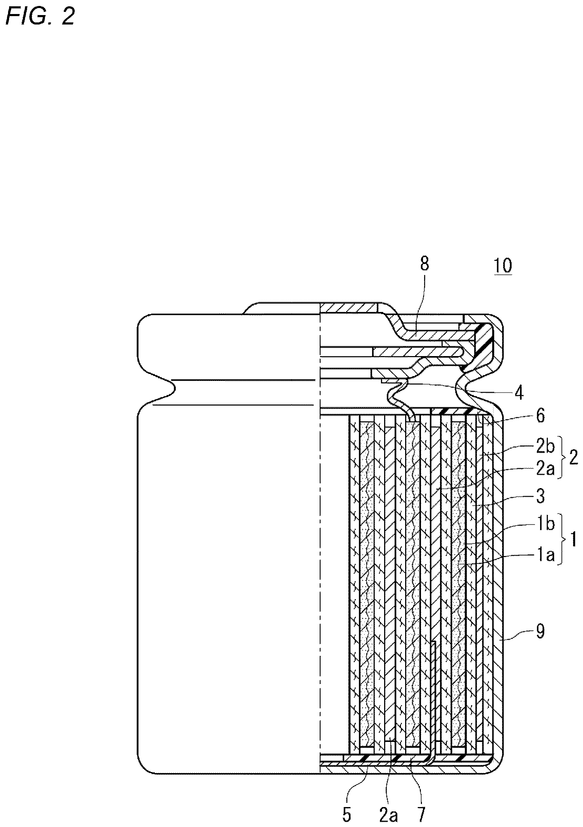

FIG. 2 is a front view, partially shown in section, of a lithium primary battery according to an embodiment of the present disclosure. In a battery case 9 of a lithium primary battery 10, a wound electrode group and a nonaqueous electrolyte solution (not shown) are housed. The electrode group is constituted by spirally winding a belt-shaped positive electrode 1 and a belt-shaped negative electrode 2, with a separator 3 interposed therebetween. A sealing plate 8 is attached to the opening of the battery case 9. The positive electrode 1 includes a positive electrode collector 1a, and a positive electrode mixture layer supported on both sides or one side of the positive electrode collector 1a. The positive electrode collector 1a and the sealing plate 8 are connected to each other via a positive electrode lead 4. The negative electrode 2 includes at least a negative electrode alloy in the form of foil (or sheet), and may include a negative electrode current collector that supports the negative electrode alloy. The negative electrode 2 includes an outermost peripheral region 2b and a main region 2a on the more inner peripheral side than the outermost peripheral region 2b. The ratio T1/T2 of the thickness T1 of the outermost peripheral region 2b to the thickness T2 of the main region 2a is more than 0.5 and less than 1. The negative electrode 2 and the battery case 9 are connected to each other via a negative electrode lead 5. On the top and bottom of the electrode group, an upper insulating plate 6 and a lower insulating plate 7 are disposed, respectively, to prevent internal shorting.

The structure and shape of the lithium primary battery are not particularly limited. The wound electrode group may be cylindrical, and may be flat. The shape of the lithium primary battery may be cylindrical, and may be prismatic.

### <<Supplementary notes>>

The above description of embodiments discloses the following techniques.

### (Technique 1)

A lithium primary battery, comprising:
a wound electrode group, and a nonaqueous electrolyte solution, wherein
the electrode group is constituted by spirally winding a belt-shaped positive electrode, a belt-shaped negative electrode, and a separator disposed between the positive electrode and the negative electrode,
the positive electrode contains at least one selected from the group consisting of manganese dioxide and graphite fluoride,
the negative electrode includes a lithium alloy,
the lithium alloy is one or more selected from the group consisting of magnesium and aluminum, and contains at least the magnesium,
a total content of the magnesium and the aluminum in the lithium alloy is 0.02 mass% or more and 11 mass% or less,
the negative electrode has an outermost peripheral region arranged at an outermost layer of the electrode group, and a main region on a more inner peripheral side than the outermost peripheral region, and
a ratio T1/T2 of a thickness T1 of the outermost peripheral region to a thickness T2 of the main region is more than 0.5 and less than 1.

### (Technique 2)

The lithium primary battery according to technique 1, wherein the T1/T2 is 0.6 or more and 0.8 or less.

### (Technique 3)

The lithium primary battery according to technique 1 or 2, wherein a content of the magnesium in the lithium alloy is 0.1 mass% or more and 5 mass% or less.

### (Technique 4)

The lithium primary battery according to any one of techniques 1 to 3, wherein a content of the aluminum in the lithium alloy is 0.01 mass% or more and 0.5 mass% or less.

### (Technique 5)

The lithium primary battery according to any one of techniques 1 to 4, wherein the negative electrode is a lithium alloy in a form of foil, without including a negative electrode current collector.

### [Examples]

The present disclosure will be specifically described below with reference to Examples and Comparative Examples. The present disclosure, however, is not limited to the following Examples.

### <<Examples 1 to 50 and Comparative Examples 2 to 4 and 6 to 8>>

### (Production of positive electrode)

To 100 parts by mass of a positive electrode active material, 5 parts by mass of Ketjen black serving as a conductive agent, 5 parts by mass of polytetrafluoroethylene serving as a binder, and an appropriate amount of pure water were added, and kneaded together, to prepare a positive electrode mixture in a wet state. The positive electrode active material used here was electrolytic manganese dioxide (MnO₂), graphite fluoride ((CF)ₙ), or iron disulfide (FeS₂).

Next, the positive electrode mixture was packed into a positive electrode current collector formed of a 0.1-mm-thick expanded metal made of stainless steel, to prepare a positive electrode precursor. The positive electrode precursor was then dried, and rolled by a roll press, followed by cutting, to obtain a belt-shaped positive electrode 1 (length 200 mm, width 38 mm, thickness 0.52 mm). Subsequently, a part of the packed positive electrode mixture was peeled off, and one end of a positive electrode lead 4 made of stainless steel was resistance-welded to the exposed part of the positive electrode current collector.

### (Production of separator-attached negative electrode)

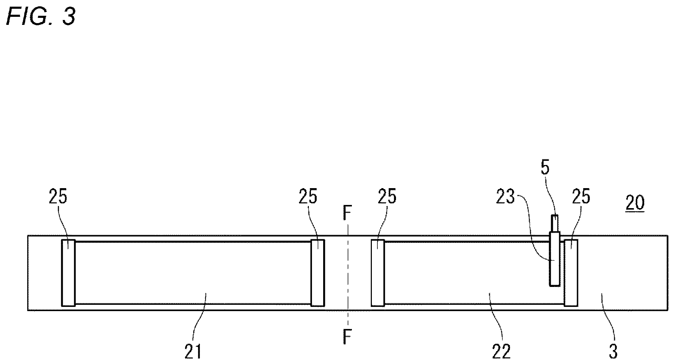

A separator-attached negative electrode 20 as illustrated in FIG. 3 was produced as follows. Note that FIG. 3 is a schematic diagram and does not necessarily reflect the actual dimensions. First, a belt-shaped first lithium alloy foil 21 and a belt-shaped second lithium alloy foil 22 were prepared. The first lithium alloy foil and the second lithium alloy foil had the same alloy composition. The lithium alloy was a Li-Mg alloy, a Li-Al alloy, or a Li-Mg-Al alloy. The Mg content, the Al content, and the total content of Mg and Al in the lithium alloy were set to the values as shown in Tables 1 to 5, respectively. The Mg content and other contents in the lithium alloy were determined by ICP emission spectroscopy or atomic absorption spectroscopy. The symbol "-" in the columns for the Mg content and other contents in the lithium alloy indicates that the presence of Mg etc. was not detected by ICP emission spectroscopy or atomic absorption spectroscopy.

The first lithium alloy foil 21 had a length of 225 mm, a width of 36 mm, and a thickness of T1 mm. The second lithium alloy foil 22 had a length of 174 mm, a width of 36 mm, and a thickness of (T2-T1) mm. The dimension in the length direction of the first lithium alloy foil 21 and that of the second lithium alloy foil 22 were adjusted so that the first lithium alloy foil 21 was longer than the second lithium alloy foil 22 by the length of a portion to be the outermost layer. Furthermore, the above dimensions in the length direction were adjusted so that, when constituting an electrode group, a region N1 in FIG. 1 was formed within a range of 3/10 or less of one round of the outermost layer of the electrode group, and a region N2 in FIG. 1 was formed within a range of 3/10 or less of one round of the outermost layer of the electrode group.

A negative electrode lead 5 made of nickel was pressure-welded to an end portion of the lithium alloy foil 22. To a portion of the negative electrode lead 5 other than its tip end, an adhesive tape 23 made of a synthetic resin was stuck so as to cover the portion.

Next, a belt-shaped separator 3 of a predetermined size was prepared. For the separator 3, a 25-µm-thick microporous film made of polyethylene was used. Across a center line F-F of the separator 3, the first lithium alloy foil was arranged on one side, and the second lithium alloy foil was arranged on the other side. At this time, the first lithium alloy foil 21 and the second lithium alloy foil 22 were arranged so that the length directions of the first and second lithium alloy foils 21 and 22 and the length direction of the separator 3 approximately coincided with each other. The first lithium alloy foil 21 and the second lithium alloy foil 22 were arranged so that an end portion of the first lithium alloy foil 21 on the center line F-F side and an end portion of the second lithium alloy foil 22 on the center line F-F side were approximately equally distanced from the center line F-F. The second lithium alloy foil was arranged so that an end portion thereof on the negative electrode lead 5 side was on the opposite side to the center line F-F. The first lithium alloy foil 21 and the second lithium alloy foil 22 were each fixed at a predetermined position on the separator 3 by sticking an adhesive tape 25 made of a synthetic resin to the end portion.

### (Production of electrode group)

The separator-attached negative electrode 20 was folded along the center line F-F, and the first lithium alloy foil 21 and the second lithium alloy foil 22 were overlapped with each other, with the end portions on the center line F-F side of the first lithium alloy foil 21 and the second lithium alloy foil 22 aligned with each other. A positive electrode 1 was arranged on the separator-attached negative electrode 20 thus folded, and spirally wound together, with the positive electrode 1 placed on the inner side. In this way, an electrode group including a negative electrode in which the thickness of an outermost peripheral region (when having a region N1, excluding the region N1) was T1, and the thickness of a main region was T2 was produced. A portion longer than the second lithium alloy foil 22 of the first lithium alloy foil 21 was arranged at the outermost layer of the electrode group. The T1, T2, and T1/T2 were set to the values as shown in Tables 1 to 5.

The lithium alloy foil is soft. Therefore, the first lithium alloy foil 21 and the second lithium alloy foil 22 were compressed and integrated together, by the pressure applied when constituting the electrode group. This eliminated the necessity of separately providing a step of bonding two lithium alloy foils together, leading to improved productivity. The tip end of the negative electrode lead 5 was exposed from one end face of the electrode group, and the tip end of the positive electrode lead 4 was exposed from the other end face of the electrode group.

### (Preparation of nonaqueous electrolyte solution)

LiCF₃SO₃ was dissolved at a concentration of 0.5 mol/L in a mixed solvent of PC, EC, and DME (volume ratio 3:2:5), to prepare a nonaqueous electrolyte solution.

### (Fabrication of lithium primary battery)

The electrode group was housed in a cylindrical battery case also serving as a negative electrode terminal. An iron case (outer diameter 17 mm, height 45.5 mm) was used as the battery case. Subsequently, after injecting the nonaqueous electrolyte solution into the battery case, the opening of the battery case was closed using a metal sealing plate also serving as a positive electrode terminal. The other end of the positive electrode lead was connected to the sealing plate, and the other end of the negative electrode lead was connected to the inner bottom surface of the battery case. In this way, a lithium primary battery was produced. In the table, A1 to A50 are batteries of Examples 1 to 50. B2 to B4 and B6 are batteries of Comparative Examples 2 to 4 and 6.

### <<Comparative Example 1>>

A battery B1 of Comparative Example 1 was produced in the same manner as the battery A1 of Example 1, except that, instead of the first lithium alloy foil and the second lithium alloy foil, a first lithium metal foil and a second lithium metal foil were used as the negative electrode.

### <<Comparative Example 5>>

Instead of the first lithium alloy foil and the second lithium alloy foil, only a lithium alloy foil (length 225 mm, width 36 mm, thickness 0.2 mm) was used as the negative electrode. In other words, T1/T2 = 1. Except for the above, a battery B5 of Comparative Example 5 was produced in the same manner as the battery A1 of Example 1.

Each of the obtained batteries of Examples and Comparative Examples was aged for 7 days in a 45 °C atmosphere after fabrication, and subjected to the following evaluation.

### [Evaluation]

With respect to the battery after aging, in a 20 °C environment, a constant-current discharge was performed at 1 mA until the depth of discharge (DOD) reached 85% (until the quantity of discharged electricity reached 85% of the rated capacity). Thereafter, with respect to the battery with a DOD of 85%, in a -20 °C environment, a 1-second pulse discharge was performed at 300 mA, to measure the minimum voltage at this time.

The evaluation results are shown in Tables 1 to 5.

**[Table 1]**

| Battery No. | Positive electrode active material | Lithium alloy | | Thickness T1 of outermost peripheral region of negative electrode (mm) | Thickness T2 of main region of negative electrode (mm) | Thickness ratio T1/T2 | Minimum voltage during pulse discharge (V) |
|---|---|---|---|---|---|---|---|
| | | Mg content (mass%) | Al content (mass%) | | | | |
| B1 | MnO₂ | - | - | 0.132 | 0.220 | 0.6 | 1.824 |
| B2 | MnO₂ | 0.01 | - | 0.132 | 0.220 | 0.6 | 1.940 |
| A2 | MnO₂ | 0.02 | - | 0.132 | 0.220 | 0.6 | 2.228 |
| A3 | MnO₂ | 0.1 | - | 0.132 | 0.220 | 0.6 | 2.252 |
| A1 | MnO₂ | 0.5 | - | 0.132 | 0.220 | 0.6 | 2.264 |
| A4 | MnO₂ | 5 | - | 0.132 | 0.220 | 0.6 | 2.257 |
| A5 | MnO₂ | 11 | - | 0.132 | 0.220 | 0.6 | 2.028 |
| B3 | MnO₂ | 12 | - | 0.132 | 0.220 | 0.6 | 1.962 |

**[Table 2]**

| Battery No. | Positive electrode active material | Lithium alloy | | Thickness T1 of outermost peripheral region of negative electrode (mm) | Thickness T2 of main region of negative electrode (mm) | Thickness ratio T1/T2 | Minimum voltage during pulse discharge (V) |
|---|---|---|---|---|---|---|---|
| | | Mg content (mass%) | Al content (mass%) | | | | |
| A6 | MnO₂ | 0.02 | - | 0.150 | 0.215 | 0.7 | 2.115 |
| A7 | MnO₂ | 0.02 | - | 0.168 | 0.210 | 0.8 | 2.012 |
| A8 | MnO₂ | 0.1 | - | 0.150 | 0.215 | 0.7 | 2.225 |
| A9 | MnO₂ | 0.1 | - | 0.168 | 0.210 | 0.8 | 2.110 |
| B4 | MnO₂ | 0.5 | - | 0.113 | 0.226 | 0.5 | 1.914 |
| A1 | MnO₂ | 0.5 | - | 0.132 | 0.220 | 0.6 | 2.264 |
| A10 | MnO₂ | 0.5 | - | 0.150 | 0.215 | 0.7 | 2.241 |
| A11 | MnO₂ | 0.5 | - | 0.168 | 0.210 | 0.8 | 2.173 |
| B5 | MnO₂ | 0.5 | - | 0.200 | 0.200 | 1.0 | 1.920 |
| A12 | MnO₂ | 5 | - | 0.150 | 0.215 | 0.7 | 2.236 |
| A13 | MnO₂ | 5 | - | 0.168 | 0.210 | 0.8 | 2.166 |
| A14 | (CF)ₙ | 0.5 | - | 0.132 | 0.220 | 0.6 | 2.203 |
| B6 | FeS₂ | 0.5 | - | 0.132 | 0.220 | 0.6 | 0.528 |

**[Table 3]**

| Battery No. | Positive electrode active material | Lithium alloy | | | Thickness T1 of outermost peripheral region of negative electrode (mm) | Thickness T2 of main region of negative electrode (mm) | Thickness ratio T1/T2 | Minimum voltage during pulse discharge (V) |
|---|---|---|---|---|---|---|---|---|
| | | Mg content (mass%) | Al content (mass%) | Al + Mg content (mass%) | | | | |
| B7 | MnO₂ | 0.01 | 0.005 | 0.015 | 0.132 | 0.220 | 0.6 | 1.842 |
| A15 | MnO₂ | 0.1 | 0.01 | 0.11 | 0.132 | 0.220 | 0.6 | 2.265 |
| A16 | MnO₂ | 0.1 | 0.1 | 0.2 | 0.132 | 0.220 | 0.6 | 2.272 |
| A17 | MnO₂ | 0.1 | 0.2 | 0.3 | 0.132 | 0.220 | 0.6 | 2.310 |
| A18 | MnO₂ | 0.1 | 0.5 | 0.6 | 0.132 | 0.220 | 0.6 | 2.311 |
| A19 | MnO₂ | 0.5 | 0.01 | 0.51 | 0.132 | 0.220 | 0.6 | 2.278 |
| A20 | MnO₂ | 0.5 | 0.1 | 0.6 | 0.132 | 0.220 | 0.6 | 2.284 |
| A21 | MnO₂ | 0.5 | 0.2 | 0.7 | 0.132 | 0.220 | 0.6 | 2.325 |
| A22 | MnO₂ | 0.5 | 0.5 | 1.0 | 0.132 | 0.220 | 0.6 | 2.318 |
| A23 | MnO₂ | 5 | 0.01 | 5.01 | 0.132 | 0.220 | 0.6 | 2.281 |
| A24 | MnO₂ | 5 | 0.1 | 5.1 | 0.132 | 0.220 | 0.6 | 2.290 |
| A25 | MnO₂ | 5 | 0.2 | 5.2 | 0.132 | 0.220 | 0.6 | 2.318 |
| A26 | MnO₂ | 5 | 0.5 | 5.5 | 0.132 | 0.220 | 0.6 | 2.315 |
| B8 | MnO₂ | 6 | 6 | 12 | 0.132 | 0.220 | 0.6 | 1.573 |

**[Table 4]**

| Battery No. | Positive electrode active material | Lithium alloy | | | Thickness T1 of outermost peripheral region of negative electrode (mm) | Thickness T2 of main region of negative electrode (mm) | Thickness ratio T1/T2 | Minimum voltage during pulse discharge (V) |
|---|---|---|---|---|---|---|---|---|
| | | Mg content (mass%) | Al content (mass%) | Al + Mg content (mass%) | | | | |
| A27 | MnO₂ | 0.1 | 0.01 | 0.11 | 0.150 | 0.215 | 0.7 | 2.241 |
| A28 | MnO₂ | 0.1 | 0.1 | 0.2 | 0.150 | 0.215 | 0.7 | 2.252 |
| A29 | MnO₂ | 0.1 | 0.2 | 0.3 | 0.150 | 0.215 | 0.7 | 2.294 |
| A30 | MnO₂ | 0.1 | 0.5 | 0.6 | 0.150 | 0.215 | 0.7 | 2.291 |
| A31 | MnO₂ | 0.5 | 0.01 | 0.51 | 0.150 | 0.215 | 0.7 | 2.255 |
| A32 | MnO₂ | 0.5 | 0.1 | 0.6 | 0.150 | 0.215 | 0.7 | 2.265 |
| A33 | MnO₂ | 0.5 | 0.2 | 0.7 | 0.150 | 0.215 | 0.7 | 2.301 |
| A34 | MnO₂ | 0.5 | 0.5 | 1.0 | 0.150 | 0.215 | 0.7 | 2.304 |
| A35 | MnO₂ | 5 | 0.01 | 5.01 | 0.150 | 0.215 | 0.7 | 2.251 |
| A36 | MnO₂ | 5 | 0.1 | 5.1 | 0.150 | 0.215 | 0.7 | 2.262 |
| A37 | MnO₂ | 5 | 0.2 | 5.2 | 0.150 | 0.215 | 0.7 | 2.302 |
| A38 | MnO₂ | 5 | 0.5 | 5.5 | 0.150 | 0.215 | 0.7 | 2.307 |

**[Table 5]**

| Battery No. | Positive electrode active material | Lithium alloy | | | Thickness T1 of outermost peripheral region of negative electrode (mm) | Thickness T2 of main region of negative electrode (mm) | Thickness ratio T1/T2 | Minimum voltage during pulse discharge (V) |
|---|---|---|---|---|---|---|---|---|
| | | Mg content (mass%) | Al content (mass%) | Al + Mg content (mass%) | | | | |
| A39 | MnO₂ | 0.1 | 0.01 | 0.11 | 0.168 | 0.210 | 0.8 | 2.231 |
| A40 | MnO₂ | 0.1 | 0.1 | 0.2 | 0.168 | 0.210 | 0.8 | 2.238 |
| A41 | MnO₂ | 0.1 | 0.2 | 0.3 | 0.168 | 0.210 | 0.8 | 2.272 |
| A42 | MnO₂ | 0.1 | 0.5 | 0.6 | 0.168 | 0.210 | 0.8 | 2.274 |
| A43 | MnO₂ | 0.5 | 0.01 | 0.51 | 0.168 | 0.210 | 0.8 | 2.240 |
| A44 | MnO₂ | 0.5 | 0.1 | 0.6 | 0.168 | 0.210 | 0.8 | 2.254 |
| A45 | MnO₂ | 0.5 | 0.2 | 0.7 | 0.168 | 0.210 | 0.8 | 2.283 |
| A46 | MnO₂ | 0.5 | 0.5 | 1.0 | 0.168 | 0.210 | 0.8 | 2.281 |
| A47 | MnO₂ | 5 | 0.01 | 5.01 | 0.168 | 0.210 | 0.8 | 2.233 |
| A48 | MnO₂ | 5 | 0.1 | 5.1 | 0.168 | 0.210 | 0.8 | 2.249 |
| A49 | MnO₂ | 5 | 0.2 | 5.2 | 0.168 | 0.210 | 0.8 | 2.284 |
| A50 | MnO₂ | 5 | 0.5 | 5.5 | 0.168 | 0.210 | 0.8 | 2.279 |

In the batteries A1 to A13, in which the Mg content in the lithium alloy was 0.02 to 11 mass%, and the T1/T2 was more than 0.5 and less than 1, as compared to in the batteries B1 to B6, the minimum voltage during pulse discharge (hereinafter referred to as a "pulse voltage") was high, and the voltage drop at the final stage of discharge at 85% DOD was suppressed.

In the battery B1, in which the thickness T1 of the outermost peripheral region of the negative electrode containing no Mg was small, the negative electrode deteriorated at the final stage of discharge, and the pulse voltage was significantly low. In the battery B2 in which the Mg content was small, the effect by adding Mg was small, and as in the battery B1, the pulse voltage was low. In the battery B3, in which the Li amount was decreased due to the increased Mg content, the pulse voltage was low. In the battery B4, although a lithium alloy containing Mg in an amount of 0.5 mass% was used, the T1/T2 was 0.5, and the thickness T1 was small. Thus, the outermost peripheral region of the negative electrode deteriorated at the final stage of discharge, and the pulse voltage was low. In the battery B5 in which the T1/T2 was 1, the Li in the negative electrode was not effectively utilized due to non-uniform discharge reaction, and the pulse voltage was low.

In the battery A14 in which graphite fluoride was used as the positive electrode active material, a high pulse voltage was obtained, as in the battery A1. In the battery B6 in which iron disulfide was used as the positive electrode active material, the pulse voltage was low. Note that the voltage of a lithium primary battery is about 3 V when the positive electrode active material is manganese dioxide or graphite fluoride, and about 1.5 V when the positive electrode active material is iron disulfide.

High pulse voltages were also obtained in the batteries A15 to A50 in which the total content of Mg and Al in the lithium alloy was 0.02 to 11 mass % and the T1/T2 was more than 0.5 and less than 1.

In the battery B7 in which the total content of Mg and Al was small, the effect by adding Mg and Al was small, and the negative electrode deteriorated at the final stage of discharge, resulting in a low pulse voltage. In the battery B8, since the Li amount was decreased due to an increased total content of Mg and Al, the pulse voltage was low.

### [Industrial Applicability]

The lithium primary battery of the present disclosure is suitably applicable, for example, as a main power source for various meters (e.g., smart meters for electricity, water, gas, etc.) and a memory backup power source.

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications as fall within the true spirit and scope of the invention.

### [Reference Signs List]

1: positive electrode, 1a: positive electrode current collector, 1b: positive electrode mixture layer, 2: negative electrode, 2a: region constituted of first lithium alloy foil and second lithium alloy foil, 2b: region constituted only of first lithium alloy foil, 3: separator, 4: positive electrode lead, 5: negative electrode lead, 6: upper insulating plate, 7: lower insulating plate, 8: sealing plate, 9: battery case, 10: lithium primary battery, 20: separator-attached negative electrode, 21: first lithium alloy foil, 22: second lithium alloy foil, 23, 25: adhesive tape

## Claims

1. A lithium primary battery, comprising:
a wound electrode group, and a nonaqueous electrolyte solution, wherein
the electrode group is constituted by spirally winding a belt-shaped positive electrode, a belt-shaped negative electrode, and a separator disposed between the positive electrode and the negative electrode,
the positive electrode contains at least one selected from the group consisting of manganese dioxide and graphite fluoride,
the negative electrode includes a lithium alloy,
the lithium alloy is one or more selected from the group consisting of magnesium and aluminum, and contains at least the magnesium,
a total content of the magnesium and the aluminum in the lithium alloy is 0.02 mass% or more and 11 mass% or less,
the negative electrode has an outermost peripheral region arranged at an outermost layer of the electrode group, and a main region on a more inner peripheral side than the outermost peripheral region, and
a ratio T1/T2 of a thickness T1 of the outermost peripheral region to a thickness T2 of the main region is more than 0.5 and less than 1.

2. The lithium primary battery according to claim 1, wherein the T1/T2 is 0.6 or more and 0.8 or less.

3. The lithium primary battery according to claim 1, wherein a content of the magnesium in the lithium alloy is 0.1 mass% or more and 5 mass% or less.

4. The lithium primary battery according to claim 1, wherein a content of the aluminum in the lithium alloy is 0.01 mass% or more and 0.5 mass% or less.

5. The lithium primary battery according to claim 1, wherein the negative electrode is a lithium alloy in a form of foil, without including a negative electrode current collector.
